# NEUE EUROPÄISCHE PATENTSCHRIFT

(11) **EP 1 141 190 B2**
(45) Veröffentlichungstag und Bekanntmachung des Hinweises auf die Entscheidung über den Einspruch: **28.12.2005**
(45) Hinweis auf die Patenterteilung: 04.06.2003
(21) Anmeldenummer: 99967020.1
(22) Anmeldetag: 29.12.1999
(51) Int. Cl.: C11D 3/04, C11D 7/04, C03C 4/00

(54) **WASSERLÖSLICHES GLAS ALS KORROSIONSSCHUTZ FÜR GLASWAREN IN EINER GESCHIRRSPÜLMASCHINE**
WATER-SOLUBLE GLASS AS CORROSION PROTECTION FOR GLASSWARE IN DISHWASHING MACHINES
VERRE HYDROSOLUBLE POUR PROTEGER DE LA VERRERIE CONTRE LA CORROSION DANS UN LAVE-VAISSELLE

(30) Priorität: 29.12.1998 DE 19860670
(43) Veröffentlichungstag der Anmeldung: 10.10.2001
(73) Patentinhaber: Reckitt Benckiser N.V., 2132 NZ Hoofddorp (NL)
(72) Erfinder: HAHN, Karlheinz,Ulrich,Gerhard, 67166 Otterstadt (DE)
(74) Vertreter: Brown, Andrew Stephen
(86) Internationale Anmeldenummer: PCT/EP1999/010467
(87) Internationale Veröffentlichungsnummer: WO 2000/039259

(56) Entgegenhaltungen:
- EP-A- 0 057 088
- EP-A- 0 383 480
- EP-A- 0 383 482
- WO-A-95/12652
- WO-A-95/13988
- WO-A-97/11151
- DATABASE WPI Section Ch, Week 198905 Derwent Publications Ltd., London, GB; Class D22, AN 1989-035383 XP002135763 & JP 63 308100 A (MITSUBISHI RAYON CO LTD) , 16. Dezember 1988 (1988-12-16)

## Beschreibung

Die Erfindung betrifft die neuartige Verwendung eines wasserlöslichen Glases für den Korrosionsschutz von Glaswaren bei Reinigungs- und/oder Spülvorgängen einer Geschirrspülmaschine, Zusammensetzungen zur Verwendung in einer Geschirrspülmaschine zu dem angegebenen Zweck und Verfahren zur Hemmung der Korrosion von Glaswaren in Reinigungsund/oder Spülvorgängen einer Geschirrspülmaschine.

Die Korrosion von Glaswaren bei Reinigungs- und/oder Spülvorgängen einer Geschirrspülmaschine ist ein seit langem bekanntes Problem. Nach gängiger Meinung stellt sich das Problem der Korrosion von Glaswaren als zwei separate Phänomene dar. Zum einen beruht die Korrosion offensichtlich auf dem Austreten von Mineralien aus der Glaszusammensetzung, begleitet von einer Hydrolyse des Silikat-Netzwerks. Zum anderen erfolgt eine Abscheidung von Silikatmaterial auf den Glaswaren. Beide Phänomene können bei mehrfachem Waschen in einer Geschirrspülmaschine zu Schädigungen der Glaswaren führen wie Trübung, Kratzer, Schlieren oder dergleichen.

Von Silikatverbindungen ist bekannt, daß sie gegen das Austreten von Mineralien aus der Glaszusammensetzung wirksam sind, andererseits aber die Abscheidung von Silikatmaterial auf der Oberfläche der Glaswaren eher verstärken können.

Aus dem Stand der Technik sind verschiedene Vorschläge zur Überwindung der beschriebenen Probleme bekannt.

Ein Ansatz besteht in der Verwendung von Zink, entweder in metallischer Form (U.S.-Patent Nr. 3,677,820) oder in Form von Zinkverbindungen. Die Verwendung von löslichen Zinksalzen zur Verhinderung der Korrosion von Glaswaren in Geschirrspülmitteln ist z.B. beschrieben in U.S.-Patent Nr. 3,255,117.

Aufgrund verschiedener Nachteile der Verwendung löslicher Zinksalze (insbesondere Bildung von Niederschlag aus unlöslichen Zinksalzen mit anderen Ionen in der Wasch- oder Spüllauge) ist in den Europäischen Patentanmeldungen EP 0 383 480, EP 0 383 482 und EP 0 387 997 die Verwendung unlöslicher Zinkverbindungen zur Hemmung der Korrosion von Glaswaren beim automatischen Geschirrspülen vorgeschlagen worden. Konkret werden als unlösliche Zinksalze Zinksilikat, Zinkcarbonat, Zinkoxid, basisches Zinkcarbonat (ungefähr: Zn₂(OH)₂CO₃), Zinkhydroxid, Zinkoxalat, Zinkmonophosphat (Zn₃(PO₄)₂) und Zinkpyrophosphat (Zn₂(P₂O₇)) vorgeschlagen. Bei der Verwendung derartiger Zinksalze in granulären Reinigerzusammensetzungen wird für die unlösliche Zinkverbindung eine maximale Teilchengröße von weniger als 1,7 mm vorgeschrieben (EP 0 383 482), für eine flüssige Spülmittelzusammensetzung wird eine mittlere Teilchengröße für die unlösliche Zinkverbindung von weniger als 250 µm vorgeschrieben (EP 0 383 480 und EP 0 387 997).

Der Nachteil dieses Standes der Technik besteht im wesentlichen darin, daß durch die geringe Löslichkeit der Zinkverbindungen bzw. Unlöslichkeit nur schwer sichergestellt werden kann, daß stets eine ausreichende Menge an wirksamem Agens für den Korrosionsschutz von Glaswaren in der Wasch- oder Spüllauge vorhanden ist Darüber hinaus kommt es durch die hohe spezifische Dichte der aufgeführten unlöslichen Zinkverbindungen zu Trennproblemen bei Pulvermischungen bzw. Abscheidung bei flüssigen Mischungen.

Schließlich sind alle bekannten Zusammensetzungen in ihrer Wirkung lediglich auf einen bestimmten Schritt im Waschzyklus festgelegt, d.h. bei Zumischung zu einer granulären Reiniger-Zusammensetzung auf den Reinigungsgang bzw. bei Zumischung zu einerflüssigen Klarspüler-Zusammensetzung auf den Klarspülgang. Keine derbekannten Zusammensetzungen ist in der Lage, ihre Wirkung bereits im Vorwaschgang und/oder einem der Zwischenspülgänge zu entfalten.

Der vorliegenden Erfindung liegt die Aufgabe zugrunde, zumindest eines, bevorzugt aber alle der obengenannten Probleme des Standes der Technik zu lösen.

Diese Aufgabe wird erfindungsgemäß gelöst durch die Verwendung eines wasserlöslichen Glases zum Korrosionsschutz von Glaswaren, wobei das wasserlösliche Glas hergestellt ist aus wenigstens einer Verbindung, die in Reinigungs- und/oder Spülvorgängen einer Geschirrspülmaschine ein für den Korrosionsschutz von Glaswaren aktives Agens freisetzt, wobei jede dieser Verbindungen jeweils höchstens 85 Mol-% des Glases ausmacht und die Löslichkeit des wasserlöslichen Glases durch einen Masseverlust von wenigstens 0,5 mg unter den in DIN ISO 719 angegebenen Bedingungen definiert ist.

Bevorzugt ist vorgesehen, daß die Löslichkeit des wasserlöslichen Glases derart ist, daß der Masseverlust bei den angegebenen Bedingungen wenigstens 10 mg, besonders bevorzugt wenigstens 50 mg, beträgt.

Weiterhin schlägt die Erfindung vor, daß die Verbindung(en), die in Reinigungs- und/oder Spülvorgängen einer Geschirrspülmaschine ein für den Korrosionsschutz von Glaswaren aktives Agens freisetzt (freisetzen), aus der Gruppe stammt (stammen), die aus den Oxiden von Zink, Aluminium, Zinn, Magnesium, Calcium, Strontium, Titan, Zirconium, Mangan und/oder Lanthan und/oder Vorstufen derselben besteht.

Die Erfindung schlägt in einer besonderen Ausführungsforin vor, daß als zumindest eine der Verbindungen Zinkoxid und/oder eine Vorstufe desselben verwendet wird.

Bevorzugt ist vorgesehen, daß wenigstens eine der glasbildenden Komponenten des wasserlöslichen Glases Phosphorpentoxid und/oder eine Vorstufe desselben ist.

Als Glaskomponente(n) wird (werden) weiterhin besonders bevorzugt ein oder mehrere A1-kalimetalloxide und/oder Vorstufen derselben eingesetzt.

Die Erfindung sieht in einer besonders bevorzugten Ausführungsform den Einsatz des wasserlöslichen Glases als Formkörpervor, wobei der Formkörper bevorzugt durch Gießen oder Ziehen des wasserlöslichen Glases hergestellt ist.

Alternativ ist vorgesehen, daß das wasserlösliche Glas in zerkleinerter Form eingesetzt wird, entweder in Form dieser Glasplättchen oder in vermahlener Form.

In vermahlener Form liegt die mittlere Teilchengröße bevorzugt bei höchstens 500 µm.

Eine alternative Ausführungsform der Erfindung schlägt eine Zusammensetzung zur Verwendung in einer Geschirrspülmaschine vor, die dadurch gekennzeichnet ist, daß sie eine für den Korrosionsschutz von Glaswaren wirksame Menge eines wasserlöslichen Glases als Formkörper umfaßt, wobei das wasserlösliche Glas hergestellt ist aus wenigstens einer Verbindung, die in Reinigungs- und/oder Spülvorgängen einer Geschirrspülmaschine ein für den Korrosionsschutz von Glaswaren aktives Agens freisetzt, wobei jede dieser Verbindungen jeweils höchstens 85 Mol% des Glases ausmacht und die Löslichkeit des wasserlöslichen Glases durch einen Masseverlust von wenigstens 0,5 mg unter den in DIN ISO 719 angegebenen Bedingungen definiert ist.

Der erfindungsgemäße Formkörper ist bevorzugt durch Gießen oder Ziehen des wasserlöslichen Glases hergestellt.

In der Ausfuhrungsform, die das wasserlösliche Glas als Formkörper betrifft, ist die Löslichkeit des wasserlöslichen Glases derart, daß der Masseverlust bei den angegebenen Bedingungen bevorzugt wenigstens 10 mg beträgt, besonders bevorzugt wenigstens 50 mg.

Die Verbindung(en), die in Reinigungs- und/oder Spülvorgängen einer Geschirrspülmaschine ein für den Korrosionsschutz von Glaswaren aktives Agens freisetzt (freisetzen) strammt (strommen) bevorzugt aus der Gruppe, die aus den Oxiden von Zink, Aluminium, Zinn, Magnesium, Calcium, Strontium, Titan, Zirconium, Mangan und/oder Lanthan und/oder Vorstufen derselben besteht.

Die Erfindung schlägt in einer besonderen Ausführungsform vor, daß zumindest eine der Verbindungen Zink-oxid und/oder eine Vorstufe desselben ist.

Vorzugsweise ist wenigstens eine der glasbildenden Komponenten des wasserlöslichen Glases Phosphor-pentoxid und/oder eine Vorstufe desselben.

Weiterhin können als Glaskomponente(n) ein oder mehrere Alkalimetalloxide und/oder Vorstufen derselben eingesetzt werden.

Es ist vorgesehen, daß im inneren der Geschirrspülmachine an einer für das Waschund/oder Spülwasser zugänglichen Stelle eine erfindungsgemäße Zusammensetzung als Formkörper bereltgestellt wird.

Vor einer detaillierteren Diskussion der Merkmale und Vorteile der vorliegenden Erfindung sei klargestellt, daß unter dem Begriff "Glas" im Sinne der vorliegenden Anmeldung nicht nur Glas im engeren Sinne, d.h. ein amorpher, nicht-kristalliner, transparenter Stoff, der aus dem Erstarren einer Schmelze entstanden ist, verstanden wird, sondern auch solche aus der Schmelze erstarrten Stoffe, die in einer amorphen Glasmatrix kristalline Einschlüsse enthalten.

Die vorliegende Erfindung löst in überraschend einfacher Weise wenigstens eine, in bevorzugten Ausführungsformen sämtliche der vorgenannten Probleme des Standes der Technik.

Durch die Verwendung eines wasserlöslichen Glases als "Träger" eines oder mehrerer Agentien für den Korrosionsschutz von Glaswaren in einer Geschirrspülmaschine wird insbesondere das im Stand der Technik bei der Verwendung löslicher Zinksalze für diesen Zweck beschriebene Problem vermieden, daß sich in erheblichem Umfang ein Niederschlag aus unlöslichen Salzen bildet, der sich in unerwünschter Weise auf dem Spülgut ablagert. Vielmehr werden aus dem erfindungsgemäßen wasserlöslichen Glas die aktiven Agentien, wie bspw. Zink-Ionen, in einem verzögerten Freisetzungsprofil in die Wasch- oder Spüllauge abgegeben, so daß stets nur eine geringe Konzentration an aktiven Agentien vorliegt. In dieser Konzentration sind die Agentien zwar für den Korrosionsschutz der Glaswaren wirksam, liegen aber nicht in solch einer Konzentration vor, daß die unerwünschte Bildung unlöslicher Salze in erheblichem Maße eintritt. Mit der Verwendung des erfindungsgemäßen wasserlöslichen Glases werden damit auch die beschriebenen Nachteile der Verwendung unlöslicher Zinkverbindungen überwunden.

Bei der Verwendung des erfindungsgemäßen wasserlöslichen Glases in vermahlener Form als Zusatz zu üblichen Geschirrspülmaschinenprodukten, die in Pulverform oder flüssiger Form vorliegen, wird darüber hinaus das oben beschriebene Entmischungsproblem gelöst, da die Verwendung eines wasserlöslichen Glases eine große Flexibilität zur Einstellung der spezifischen Dichte je nach Erfordernis bereitstellt.

Mit der Verwendung des erfindungsgemäßen wasserlöslichen Glases als Formkörper und Bereitstellung desselben im Inneren der Geschirrspülmaschine an einer für das Wasch- und/oder Spülwasser zugänglichen Stelle, wie bspw. im Besteckkorb, wird erstmals auch ein Korrosionsschutz zur Verfügung gestellt, der in sämtlichen Spül- und Waschgängen wirksam ist, d.h. vom Vorspülgang über den Reinigungsgang und die Zwischenspülgänge bis zum Klarspülgang, und darüber hinaus über mehrere Zyklen vorhält. Dadurch wird nicht nur ein umfassenderer Korrosionsschutz für Glaswaren in der Geschirrspülmaschine bereitgestellt, sondern auch die Handhabung durch den Verbraucher deutlich erleichtert und verbessert.

Die erfindungsgemäßen Gläser können hergestellt werden durch Schmelzen von Mischungen der Oxidkomponenten, oder Vorstufen derselben, für einen so ausreichenden Zeitraum, daß eine homogene Schmelze erhalten wird, die anschließend so weit heruntergekühlt wird, bis sie sich verfestigt.

Die Ausformung zu einem Forkörper kann auf verschiedene Arten erfolgen, beispielweise durch Gießen (z. B. in eine Graphitform), Ziehen, Pressen oder Blasen.

Wenn das erfindungsgemäße Glas in zerkleinerter Form eingesetzt werden soll, kann es z.B. in einer für diesen Zweck geeigneten Mühle aufgemahlen und in eine geeignete Kornfraktion, z.B. mit einer mittleren Teilchengröße von höchstens 500 µm, abgesiebt werden. Teilchenförmiges Glas kann allerdings auch auf andere Weise erhalten werden, z.B. durch Brechen dünner Glasplatten, wodurch scheibenförmige dünne Plättchen entstehen, die im Durchmesser mehrere Millimeter groß sein können. Bei beiden Ausführungsformen, d.h. sphärischen Partikeln mit einer bestimmten maximalen Teilchengröße und dünnen Plättchen, kann zuverlässig sowohl eine gute Vermischung mit dem Geschirrspülmittel erreicht als auch eine Entmischung während Lagerung und Transport vermieden werden.

Die Definition der Wasserlöslichkeit des verwendeten Glases erfolgt gemäß der DIN ISO 719. Dieses Prüfverfahren ist eine Prüfung von Glas als Werkstoff, die an Glasgrieß durchgeführt wird. Dabei erfolgt eine Extraktion von 2 g Grieß der Korngröße zwischen 300 und 500 µm über 60 min mit Wasser der Qualität 2 bei 98°C. Weitere Details zur Versuchsdurchführung ergeben sich aus der entsprechenden Norm. Die Bestimmung des Löslichkeitsgrades erfolgt allerdings im Unterschied zur genannten Norm nicht durch eine Titration mit Säure, sondern durch eine übliche gravimetrische Bestimmung des Masseverlustes.

### Beispiel 1

In diesem Beispiel wurde ein Glas der folgenden Zusammensetzung mit dem unten beschriebenen Verfahren hergestellt:

**Tabelle 1**

| Komponente | Mol-% |
|---|---|
| P₂O₅ | 20 |
| ZnO | 36 |
| SO₃ | 20 |
| Na₂O | 10 |
| Li₂O | 5 |
| K₂O | 7 |
| CaO | 2 |

Als Rohstoffe wurden die Ammoniumverbindungen bzw. Carbonate der entsprechenden Elemente eingesetzt, das Sulfat wurde durch Zugabe von 20 Mol-% Zinksulfat hinzugegeben. Die Rohstoffe wurden vermischt und in einem elektrisch beheizten Ofen bei 850°C in einem Aluminiumoxid-Tiegel erschmolzen. Nach einer Haltezeit von 3 h wurde das Glas ausgegossen.

Zur Herstellung eines entsprechenden Pulvers wurde das ausgegossene Glas an der Luft abgekühlt, mit einer Schlagkreuzmühle aufgemahlen und eine Kornfraktion mit einer mittleren Teilchengröße von unter 400 µm abgesiebt.

Um einen massiven Glaskörper zu erhalten, wurde das heiße Glas in eine Graphitform gegossen und anschließend in einem Temperofen beginnend bei 300°C langsam abgekühlt.

Das auf diese Weise hergestellte Zink-Phosphat-Glas weist eine Löslichkeit auf, die durch einen Masseverlust von 75 mg unter den in DIN ISO 719 angegebenen Bedingungen gekennzeichnet ist.

Im folgenden werden Vergleichsversuche zur Wirksamkeit des erfindungsgemäßen Glases als Glaskorrosionsinhibitor beim maschinellen Geschirrspülen dwchgeführt. In einer ersten Versuchsreihe wurden Testgläser 50- bzw. 100mal in einerspeziellen Dauerlaufgeschirrspülmaschine (Miete G540 Spezial) gespült. Als Referenzsubstanz wurde der pulverförmige Geschirr-Reiniger Calgonit® Ultra 2-Phasen Pulver verwendet. Die Vergleichsversuche wurden durchgeführt, indem dem pulverförmigen bzw. gelförmigen Geschirr-Reiniger durch Zunüschen bzw. Verrühren 1 Gew.-% des erfindungsgemäßen Glases in Pulverform zugesetzt wurde.

Eine weitere Testreihe wurde durchgeführt unter Verwendung des Referenz-Geschirr-Reinigers mit gleichzeitiger Bereitstellung eines massiven Blocks aus dem erfindungsgemäßen Glas in den Abmessungen (vor den Testzyklen) 30 mm x 30 mm x 5 mm im Geschirrkorb der Geschirrspülmaschine. Der Gewichtsverlust des massiven Glasblockes nach 100 Spülzyklen lag bei ca. 22,5 g.

Reinigerdosierung: 20 g Calgonit® Ultra 2-Phasen Pulver pro Spülgang, Dosierung automatisch zu Beginn des Reinigungsganges.

Wasserhärte in der Maschine: 0,1° dGH, zentrale Enthärtung über Ionenaustauscher, interner Ionenaustauscher nicht in Betrieb.

Reinigungsprogramm: 65°C-Programm d.h. (sowohl der Reinigungs- als auch der Klarspülgang werden bei 65°C betrieben).

Wasserverbrauch pro Spülzyklus: 23,5 I.

Klarspülermenge pro Zyklus: 3 ml (Calgonit ® Klarspüler).

Es erfolgte keine Anschmutzung des Geschirrs, die Spülkörbe waren neben Testgeschirr mit Blindgeschirr bestückt.

Das Testgut bestand aus folgenden Glassorten:
Schott Zwiesel Glaswerke AG:
   "Neckarbecher" 1812/2, Weinglas, Kristallglas
   "Paris" 4858/42, Longdrinkbecher, Kristallglas
Nachtmann Bleikristallwerke GmbH:
   "Opal", Whiskyglas, Bleikristallglas
   "Bistro", Whiskyschwenker, Bleikristallglas
Verrerie Cristallerie D'Arques:
   "Luminarc Octime Transparent", Whiskyglas 30 cl,
   "Luminard Islande Dauphine", dekoriertes Longdrinkglas

Bei den Testgläsem wurde der Gewichtsverlust nach 50 bzw. 100 Spülzyklen gravimetrisch ermittelt. Sichtbare Veränderungen der Glasoberfläche wurden bei Tageslicht bzw. in einem speziellen Lichtkasten bewertet. Bei dem Lichtkasten handelt es sich um einen Kasten in den Abmessungen 70 cm x 40 cm x 65 cm (LxBxH), dessen gesamter Innenraum matt-schwarz gestrichen ist. Der Kasten wird von oben mit einer Lampe Osram L 20 W/25 S (60 cm Länge) beleuchtet, die nach vorne mit einer Blende abgedeckt ist. In dem Kasten sind Einlegeböden angeordnet, auf die die Gläser gestellt werden können. Die Front des Kastens ist offen.

Die visuelle Bewertung der Glaskorrosion erfolgte anhand des folgenden Schemas:

| Bewertung | Schadensbild im Tageslicht | Schadensbild im Lichtkasten |
|---|---|---|
| 0 | Keine Veränderung | Keine Veränderung |
| 1 | Keine sichtbaren Trübungen | Leichte Trübungen |
| 2 | Kaum sichtbare Trübungen | Deutlich sichtbare Trübungen |
| 3 | Gut sichtbare Trübungen | Starke Trübungen |
| 4 | Starke Schädigung, Glas unansehnlich | -------- |

Die Ergebenisse der Testreihe, in der der Effekt des Zusatzes von 1 Gew0-% des oben beschriebenen gemahlenen Glases bzw. der Bereitstellung desselben als ein massiver Glasblock in der Geschirrspülmaschine gegenüber dem pulverförmigen Referenzgeschirr-Reiniger untersucht wurde, ergeben sich aus den folgenden Tabellen 2a bis 2e.

Der Zusatz von 1 % gemahlenem Glas entspricht dabei dem Zusatz von etwa 0,35 % Zinkoxid, da der Gehalt von Zinkoxid in dem entsprechenden Glas bei etwa 1/3 liegt.

Wie zuvor angegeben liegt der Gewichtsverlusts des massiven Glasblockes nach 100 Spülzyklen bei ca. 22,5 g . Daraus berechnet sich ein mittlerer Gewichtsverlusts pro Spülzyklus von 225 mg. Bezogen auf eine Reinigerdosierung von 20 g Pulver und unter Berücksichtigung eines Gehaltes von Zinkoxid in dem Glas von etwa 1/3 errechnet sich daraus ebenfalls ungefähr ein Zusatz von 0,4 % Zinkoxid pro Spülzyklus. Sowohl der Zusatz von 1 % gemahlenem Glas als auch die Bereitstellung des massiven Glasblockes stellt damit annäherungsweise die gleiche Menge an Zinkoxid pro Spülzyklus zur Verfügung.

**Tabelle 2a**

| **Masseverlust** | | | |
|---|---|---|---|
| | 50 Spülzyklen | | |
| | Referenz | 1 % gemahlenes Glas | Massives Glas |
| Nektar | 38 | 23 | 10,5 |
| Paris | 57,5 | 36 | 25 |
| Octime | 28 | 24 | 14,5 |
| Islande Dekor | 561 | 223 | 122 |

| | 100 Spülzyklen | | |
|---|---|---|---|
| | Referenz | 1 % gemahlenes Glas | Massives Glas |
| Nektar | 83 | 33 | 24 |
| Paris | 130,5 | 53.5 | 38,5 |
| Octime | 60 | 29 | 20,5 |
| Islande Dekor | 1093 | 474 | 308 |

**Tabelle 2b**

| **Glasschädigung** | | | |
|---|---|---|---|
| | 50 Spülzyklen | | |
| | Referenz | 1 % gemahlenes Glas | Massives Glas |
| Nektar | 3,0 | 1,5 | 1,0 |
| Paris | 2,0 | 0 | 0,5 |
| Octime | 5,5 | 1,0 | 0 |
| Islande Dekor | 4,0 | 1,0 | 1,0 |

| | 100 Spülzyklen | | |
|---|---|---|---|
| | Referenz | 1 % gemahlenes Glas | Massives Glas |
| Nektar | 2,5 | 2,5 | 1 |
| Paris | 2,5 | 0 | 0,5 |
| Octime | 11,5 | 4,5 | 4,5 |
| Islande Dekor | 8,5 | 4 | 3 |

**Tabelle 2c**

| **Auflistung der Glasschädigungen** | | |
|---|---|---|
| Referenz | 50 Spülzyklen | 100 Spülzyklen |
| **Gläser** | | |
| Neckarbecher | GTk 2, GTm 1 | GTk 1-2, GTm 1 |
| Paris (groß) | GTe 2 | GTe 2-3 |
| Octime | GTm 1-2, GTk 1-2 | GTm3, GTk3, CLk3, CLe 2-3 |
| Islande Dekor | FA 1, DS 2, CLe 1 | FA 3, DS 3-4, CLe 2 |

**Tabelle 2d**

| **Auflistung der Glasschädigungen** | | |
|---|---|---|
| mit 1 % Glaspulver | 50 Spülzyklen | 100 Spülzyklen |
| **Gläser** | | |
| Neckarbecher | GTk 1, GTm 0-1 | GTk 1-2, GTm 1 |
| Paris (groß) | 0 | 0 |
| Octime | CLk 1 | GTm 1, GTk 1-2, CLk 2 |
| Islande mit Dekor | DS 1 | DS 2, FA 2 |

**Tabelle 2e**

| **Auflistung der Glasschädigungen** | | |
|---|---|---|
| Massives Glas | 50 Spülzyklen | 100 Spülzyklen |
| **Gläser** | | |
| Neckarbecher | GTk 1 | GTk 1 |
| Paris (groß) | GTk 0-1 | GTk 0-1 |
| Octime | 0 | GTm 1-2, GTk 2, CLk 1 |
| Islande mit Dekor | 0 | DS 1-2, FA 1-2 |
| GT= Glastrübung | | |
| CL = dünne parallele Schlieren, "Cordlines" | | |
| FA = Farbveränderungen | | |
| m = Mundrandbereich | | |
| k = Glaskelch | | |
| s = Stielansatz | | |
| DS = Dekorschädigung | | |
| f= Glasfuß | | |
| e = Glaseis | | |

Aus den Tabellen ist ersichtlich, daß sowohl bei Zusatz von 1 % gemahlenem Glas als auch bei Bereitstellung des massiven Glasblockes ein deutlich verbesserter Korrosionsschutz gegenüber der Referenzzusammensetzung erhalten wird, wobei der Schutz durch den massiven Glasblock noch einmal deutlich besser ausfällt als bei Zusatz von zermahlenem Glas.

In einer weiteren Versuchsreihe wurde das erfndungsgemäße Glas im Vergleich mit dem aus dem Stand der Technik bekannten unlöslichen Zinkoxid bzw. schwerlöslichen Zinkphosphat getestet Als Reiniger wurde in diesen Fällen Calgonit®-Ultra 2- Phasen Gel (25 ml pro Spülgang) verwendet. Aus der folgenden Tabelle 3a ergibt sich, daß die Korrosionsschutzwirkung, gemessen als Masseverlust gemäß dem oben angegebenen Verfahren, eines Zusatzes von 1 Gew.% des erfindungsgemäßen Glases dieses Beispiels derjenigen eines Zusatzes von 0,5 % Zinkoxid entspricht. Da der Gehalt von Zinkoxid in dem entsprechenden Glas aber nur bei etwa 1/3 liegt, der Zusatz von 1 % Glas also nur dem Zusatz von etwa 0,35 % Zinkoxid entspricht, ergibt sich daraus eine überraschend überlegene Korrosionsschutzwirkung des erfindungsgemäßen Glases gegenüber dem einfachen Zusatz von Zinkoxid, sowie eine überlegene Wirkung gegenüber einer, ausgedrückt als ZnO, noch weit höheren Konzentration von Zinkphosphat.

**Tabelle 3a**

| **Masserverlust** | | | | |
|---|---|---|---|---|
| | 100 Spülzyklen | | | |
| | 0,25 %ZnO | 1 % Glas | 0,5 % ZnO | 1 % Zn-Phos.(≙0,63 % ZnO) |
| Neckarbecher | 22 | 14 | 12 | 20 |
| | 21 | 16 | 10 | 17 |
| Paris (groß) | 36 | 18 | 21 | 38 |
| | 34 | 14 | 25 | 27 |
| Opal | 36 | 30 | 25 | 33 |
| Bistro | 42 | 34 | 34 | 33 |
| Summe | 191 | 126 | 127 | 168 |

**Tabelle 3b**

| **Glasschädigung** | | | | |
|---|---|---|---|---|
| | 100 Spülzyklen | | | |
| | 0,25 %ZnO | 1 % Glas | 0,5 % ZnO | 1 % Zn-Phos.(≙0,63 % ZnO) |
| Neckarbecher | GTk 1; MR 1 | GTk 0-1 | GTk 0-1 | GTk 2; GTm 2 |
| Paris (groß) | GTe 1 | 0 | 0 | 0 |
| Opal | 0 | 0 | 0 | 0 |
| Bistro | 0 | 0 | 0 | 0 |
| GT= Glastrübung | | | | |
| CL = dünne parallele Schlieren, "Cordlines" | | | | |
| FA = Farbveränderungen | | | | |
| DS = Dekorschädigung | | | | |
| m = Mundrandbereich | | | | |
| k = Glaskelch | | | | |
| s = Stielansatz | | | | |
| f= Glasfuß | | | | |
| e = Glaseis | | | | |

### Beispiel 2

In diesem Beispiel wurde ein Glas der folgenden Zusammensetzung mit demselben Verfahren, das in Beispiel 1 beschrieben ist, hergestellt:

**Tabelle 4**

| Komponente | Mol-% |
|---|---|
| P₂O₅ | 20 |
| Na₂O | 9,5 |
| K₂O | 12 |
| CaO | 38 |
| SO₃ | 20,5 |

Erste Versuche zur Wirksamkeit des erfindungsgemäßen Glases als Glaskorrosionsinhibitor beim maschinellen Geschirrspülen haben ähnliche positive Ergebnisse ergeben wie bei dem in Beispiel 1 beschriebenen Glas.

### Beispiel 3

In diesem Beispiel wurde ein Glas der folgenden Zusammensetzung mit demselben Verfahren, das in Beispiel 1 beschrieben ist, hergestellt:

**Tabelle 5**

| Komponente | Mol-% |
|---|---|
| P₂O₅ | 40,5 |
| Na₂O | 20,3 |
| K₂O | 10,7 |
| CaO | 8 |
| SO₃ | 20,5 |

Erste Versuche zur Wirksamkeit des erfindungsgemäßen Glases als Glaskorrosionsinhibitor beim maschinellen Geschirrspülen haben ähnliche positive Ergebnisse ergeben wie bei dem in Beispiel 1 beschriebenen Glas.

Die in der vorstehenden Beschreibung sowie in den Ansprüchen offenbarten Merkmale der Erfindung können sowohl einzeln als auch in beliebiger Kombination für die Verwirklichung der Erfindung wesentlich sein.

## Patentansprüche

1. Verwendung eines wasserlöslichen Glases zum Korrosionsschutz von Glaswaren, wobei das wasserlösliche Glas, hergestellt ist aus wenigstens einer Verbindung, die in Reinigungs- und/oder Spülvorgängen einer Geschirrspülmaschine ein für den Korrosionsschutz von Glaswaren aktives Agens freisetzt, wobei jede dieser Verbindungen jeweils höchstens 85 Mol-% des Glases ausmacht und die Löslichkeit des wasserlöslichen Glases durch einen Masseverlust von wenigstens 0,5 mg unter den in DIN ISO 719 angegebenen Bedingungen definiert ist.

2. Verwendung nach Anspruch 1, **dadurch gekennzeichnet, daß** die Löslichkeit des wasserlöslichen Glases derart ist, daß der Masseverlust bei den angegebenen Bedingungen wenigstens 10 mg beträgt.

3. Verwendung nach Anspruch 2, **dadurch gekennzeichnet, daß** die Löslichkeit des wasserlöslichen Glases derart ist, daß der Masseverlust bei den angegebenen Bedingungen wenigstens 50 mg beträgt.

4. Verwendung nach einem der vorangehenden Ansprüche, **dadurch gekennzeichnet, daß** die Verbindung(en), die in Reinigungs- und/oder Spülvorgängen einer Geschirrspülmaschine ein für den Korrosionsschutz von Glaswaren aktives Agens freisetzt (freisetzen), aus der Gruppe stammt (stammen), die aus den Oxiden von Zink, Aluminium, Zinn, Magnesium, Calcium, Strontium, Titan, Zirconium, Mangan und/oder Lanthan und/oder Vorstufen derselben besteht.

5. Verwendung nach Anspruch 4, **dadurch gekennzeichnet, daß** als zumindest eine der Verbindungen Zinkoxid und/oder eine Vorstufe desselben verwendet wird.

6. Verwendung nach einem der vorangehenden Ansprüche, **dadurch gekennzeichnet, daß** wenigstens eine der glasbildenden Komponenten des wasserlöslichen Glases Phosphorpentoxid und/oder eine Vorstufe desselben ist.

7. Verwendung nach einem der vorangehenden Ansprüche, **dadurch gekennzeichnet, daß** als Glaskomponente(n) ein oder mehrere Alkalimetalloxide und/oder Vorstufen derselben eingesetzt wird (werden).

8. Verwendung nach einem der vorangehenden Ansprüche, **dadurch gekennzeichnet, daß** das wasserlösliche Glas als Formkörper eingesetzt wird.

9. Verwendung nach Anspruch 8, **dadurch gekennzeichnet, daß** der Formkörper durch Gießen oder Ziehen des wasserlöslichen Glases hergestellt ist.

10. Verwendung nach einem der Ansprüche 1 bis 7, **dadurch gekennzeichnet, daß** das wasserslösliche Glas in zerkleinerter Form eingesetzt wird.

11. Verwendung nach Anspruch 10, **dadurch gekennzeichnet, daß** das wasserlösliche Glas in durch Brechen dünner Glasplatten hergestellter Form eingesetzt wird.

12. Verwendung nach Anspruch 10, **dadurch gekennzeichnet, daß** das wasserlösliche Glas in vermahlener Form eingesetzt wird.

13. Verwendung nach Anspruch 12, **dadurch gekennzeichnet, daß** das vermahlene Glas eine mittlere Teilchengröße von höchstens 500 µm aufweist.

14. Zusammensetzung zur Verwendung in einer Geschirrspülmaschine, **dadurch gekennzeichnet, daß** sie eine für den Korrosionsschutz von Glaswaren wirksame Menge eines wasserlöslichen Glases als Formkörper umfaßt, wobei das wasserlösliche Glas hergestellt ist aus wenigstens einer Verbindung, die in Reinigungs- und/oder Spülvorgängen einer Geschirrspülmaschine ein für den Korrosionsschutz von Glaswaren aktives Agens freisetzt, wobei jede dieser Verbindungen jeweils höchstens 85 Mol-% des Glases ausmacht und die Löslichkeit des wasserlöslichen Glases durch einen Masseverlust von wenigstens 0,5 mg unter den in DIN ISO 719 angegebenen Bedingungen definiert ist.

15. Zusammensetzung nach Anspruch 14, **dadurch gekennzeichnet, daß** der Formkörper durch Gießen oder Ziehen des wasserlöslichen Glases hergestellt ist.

16. Zusammensetzung nach Anspruch 15, **dadurch gekennzeichnet, daß** die Löslichkeit des wasserlöslichen Glases derart ist, daß der Masseverlust bei den angegebenen Bedingungen wenigstens 10 mg beträgt.

17. Zusammensetzung nach Anspruch 16, **dadurch gekennzeichnet, daß** die Löslichkeit des wasserlöslichen Glases derart ist, daß der Masseverlust bei den angegebenen Bedingungen wenigstens 50 mg beträgt.

18. Zusammensetzung nach Ansprüch 17, **dadurch gekennzeichnet, daß** die Verbindung(en), die in Reinigungs- und/oder Spülvorgängen einer Geschirrspülmaschine ein für den Korrosionsschutz von Glaswaren aktives Agens freisetzt (freisetzen), aus der Gruppe stammt (stammen), die aus den Oxiden von Zink, Aluminium, Zinn, Magnesium, Calcium, Strontium, Titan, Zirconium, Mangan und/oder Lanthan und/oder Vorstufen derselben besteht.

19. Zusammensetzung nach Anspruch 18, **dadurch gekennzeichnet, daß** zumindest eine der Verbindungen Zinkoxid und/oder eine Vorstufe desselben ist.

20. Zusammensetzung nach Anspruch 19, **dadurch gekennzeichnet, daß** wenigstens eine der glasbildenden Komponenten des wasserlöslichen Glases Phosphorpentoxid und/oder eine Vorstufe desselben ist.

21. Zusammensetzung nach Anspruch 20, **dadurch gekennzeichnet, daß** als Glaskomponente(n) ein oder mehrere Alkalimetalloxide und/oder Vorstufen derselben eingesetzt wird (werden).

22. Verfahren zur Hemmung der Korrosion von Glaswaren in Reinigungs- und/oder Spülvorgängen einer Geschirrspülmaschine, **dadurch gekennzeichnet, daß** im Inneren der Geschirrspülmaschine an einer für das Wasch- und/oder Spülwasser zugänglichen Stelle eine Zusammensetzung gemäß Anspruch 14 oder 15 bereitgestellt wird.

## Claims

1. Use of a water soluble glass for protecting glassware from corrosion, in which the water soluble glass is produced from at least one compound, which releases an active agent to protect glassware from corrosion in cleaning and/or rinse cycles of a dishwasher, in which each of these compounds constitutes 85% molar weight of the glass each time and the solubility of the water soluble glass is defined by a material consumption of at least 0.5 mg under the conditions given in DIN ISO 719.

2. Use in accordance with claim 1, wherein the solubility of the water soluble glass is such that the material consumption amounts to at least 10 mg in the given conditions.

3. Use in accordance with claim 2, wherein the solubility of the water soluble glass is such that the material consumption amounts to at least 50 mg in the given conditions.

4. Use in accordance with one of the preceding claims, wherein the compound(s) which release(s) an active agent to protect glassware from corrosion in the cleaning and/or rinse cycles of a dishwasher, comes from the group which consists of oxides from zinc, aluminium, zinn, magnesium, calcium, strontium, titanium, zirconium, manganese and/or lanthanum and/or pre-stages of same.

5. Use in accordance with claim 4, wherein zinc oxide and/or a pre-stage is used as at least one of the compounds.

6. Use in accordance with one of the preceding claims, wherein at least one of the glass-forming components of the water soluble glass is phosphorous pentoxide and/or a pre-stage.

7. Use in accordance with one of the preceding claims, wherein one or more alkali metal oxides and/or pre-stages is (are) used as glass component(s).

8. Use in accordance with one of the preceding claims, wherein the water soluble glass is used as a shaped body.

9. Use in accordance with claim 8, wherein the shaped body is produced by casting or drawing the water soluble glass as a shaped body.

10. Use in accordance with one of the claims 1 to 7, wherein the water soluble glass is used in crushed form.

11. Use in accordance with claim 10, wherein the water soluble glass is used in a form produced by breaking thin glass sheets.

12. Use in accordance with claim 10, wherein the water soluble glass is used in ground form.

13. Use in accordance with claim 12, wherein the ground glass shows an average particle size of 50 µm at the most.

14. Composition for use in a dishwasher, comprising an effective quantity of a water soluble glass in crushed form to protect glassware from corrosion, in which the water soluble glass is produced from at least one compound which releases an active agent to protect glassware from corrosion in cleaning and/or rinse cycles of a dishwasher, in which each of these compounds constitutes 85% molar weight of the glass each time and the solubility of the water soluble glass is defined by a material consumption of at least 0.5 mg under the conditions given to DIN ISO 719.

15. Composition in accordance with claim 14, wherein the shaped body is produced by casting or drawing the water soluble glass.

16. Composition in accordance with claim 15, wherein the solubility of the water soluble glass is such that the material consumption amounts to at least 10 mg in the given conditions.

17. Composition in accordance with claim 16, wherein the solubility of the water soluble glass is such that the material consumption amounts to at least 50 mg in the given conditions.

18. Composition in accordance with 17, wherein the compound(s) which release(s) an active agent to protect glassware from corrosion in cleaning and/or rinse cycles of a dishwasher, comes from the group which consists of oxides from zinc, aluminium, zinn, magnesium, calcium, strontium, titanium, zirconium, manganese and/or lanthanum and/or pre-stages of the same.

19. Composition in accordance with claim 18, wherein at least one of the compounds is zinc oxide and/or a pre-stage.

20. Composition in accordance with claims 19, wherein at least one of the glass forming components of the water soluble glass is phosphorous pentoxide and/or a pre-stage.

21. Composition in accordance with claims 20, wherein one or more alkali metal oxides and/or pre-stages is (are) used as glass component(s).

22. Method for inhibiting glassware corrosion in cleaning and/or rinse cycles of a dishwasher, wherein a composition is provided in the interior of the dishwasher at a place accessible to the wash and/or rinse water in accordance with claims 14 or 15.

## Revendications

1. Utilisation d'un verre hydrosoluble pour protéger de la verrerie contre la corrosion, dans laquelle le verre hydrosoluble est préparé à partir d'au moins un composé qui libère dans les phases de lavage et/ou de rinçage d'un lave-vaisselle un agent actif pour protéger de la verrerie contre la corrosion, chacun de ces composés constituant au maximum 85 moles % du verre et la solubilité du verre hydrosoluble étant définie par une perte de masse d'au moins 0,5 mg dans les conditions indiquèes par la norme DIN ISO 719.

2. Utilisation suivant la revendication 1, **caractérisée en ce que** la solubilité du verre hydrosoluble est telle que la perte de masse dans les conditions indiquées s'élève au moins à 10 mg.

3. Utilisation suivant la revendication 2, **caractérisée en ce que** la solubilité du verre hydrosoluble est telle que la perte de masse dans les conditions indiquée s'élève au moins à 50 mg.

4. Utilisation suivant l'une des revendications précédentes, **caractérisée en ce que** le ou les composés qui libèrent un agent actif pour la protection de verrerie contre la corrosion dans les phases de lavage et/ou de rinçage d'un lave-vaisselle proviennent du groupe constitué des oxydes de zinc, d'aluminium, d'étain, de magnésium, de calcium, de strontium, de titane, de zirconium, de manganèse et/ou de lanthane et/ou de leurs précurseurs.

5. Utilisation suivant la revendication 4, **caractérisée en ce qu'**elle implique comme au moins l'un des composés, l'oxyde de zinc et/ou un précurseur d'oxyde de zinc.

6. Utilisation suivant l'une des revendications précédentes, **caractérisée en ce que** l'un au moins des composants générant le verre hydrosoluble est le pentoxyde de phosphore et/ou un précurseur de ce dernier.

7. Utilisation suivant l'une des revendications précédentes, **caractérisée en ce qu'**un ou plusieurs oxydes de métaux alcalins et/ou précurseurs de ces oxydes sont utilisés comme composants du verre.

8. Utilisation suivant l'une des revendications précédentes, **caractérisée en ce que** le verre hydrosoluble est utilisé à l'état de corps façonné.

9. Utilisation suivant la revendication 8, **caractérisée en ce que** le corps façonné est produit par moulage ou étirage du verre hydrosoluble.

10. Utilisation suivant l'une des revendications 1 à 7, **caractérisée en ce que** le verre hydrosoluble est utilisé sous une forme divisée.

11. Utilisation suivant la revendication 10, **caractérisée en ce que** le verre hydrosoluble est utilisé sous une forme produite par rupture de minces plaques de verre.

12. Utilisation suivant la revendication 10, **caractérisée en ce que** le verre hydrosoluble est utilisé sous la forme broyée.

13. Utilisation suivant la revendication 12, **caractérisée en ce que** le verre broyé a un diamètre moyen de particules au maximum égal à 500 µm.

14. Composition destinée à être utilisée dans un lavevaisselle, **caractérisée en ce qu'**elle comprend une quantité efficace pour protéger de la verrerie contre la corrosion, d'un verre hydrosoluble à l'état de corps façonné, le verre hydrosoluble étant préparé à partir d'au moins un composé qui libère un agent actif pour protéger la verrerie contre la corrosion dans les phases de lavage et/ou de rinçage d'un lave-vaisselle, chacun de ces composés constituant au maximum 85 moles % du verre et la solubilité du verre hydrosoluble étant définie par une perte de masse d'au moins 0,5 mg dans les conditions indiquées dans la norme DIN ISO 719.

15. Composition suivant la revendication 14, **caractérisée en ce que** le corps façonne est produit par coulée ou étirage du verre hydrosoluble.

16. Composition suivant la revendication 15, **caractérisée en ce que** la solubilité du verre hydrosoluble est telle que la perte de masse dans les conditions indiquées s'élève au moins à 10 mg.

17. Composition suivant la revendication 16, **caractérisée en ce que** la solubilité du verre hydrosoluble est telle que la perte de masse dans les conditions indiquées s'élève au moins à 50 mg.

18. Composition suivant la revendication 17, **caractérisée en ce que** le ou les composés qui libèrent un agent actif pour protéger de la verrerie contre la corrosion dans les phases de lavage et/ou de rinçage d'un lave-vaisselle proviennent du groupe qui est constitué des oxydes de zinc, d'aluminium, d'étain, de magnésium, de calcium, de strontium, de titane, de zirconium, de manganèse et/ou de lanthane et/ou de leurs précurseurs.

19. Composition suivant la revendication 18, **caractérisée en ce qu'**au moins l'un des composés est l'oxyde de zinc et/ou un précurseur d'oxyde de zinc.

20. Composition suivant la revendication 19, **caractérisée en ce qu'**au moins l'un des composants de formation du verre hydrosoluble est le pentoxyde de phosphore et/ou un précurseur de ce dernier.

21. Composition suivant la revendication 20, **caractérisée en ce qu'**un ou plusieurs oxydes de métaux alcalins et/ou leurs précurseurs sont utilisés comme composants du verre.

22. Procédé d'inhibition de la corrosion de verrerie dans les phases de lavage et/ou de rinçage d'un lave-vaisselle, **caractérisée en ce qu'**une composition suivant la revendication 14 ou 15 est prévue en vue de son utilisation à l'intérieur du lave-vaisselle en un point accessible à l'eau de lavage et/ou de rinçage.
